# EUROPEAN PATENT SPECIFICATION

(11) **EP 2 699 862 B1**
(45) Date of publication and mention of the grant of the patent: **21.01.2015**
(21) Application number: 12720571.4
(22) Date of filing: 17.04.2012
(51) Int. Cl.: F27D 3/00, F27D 3/18, B65G 53/58, C21C 5/52

(54) **DEVICE TO INJECT SOLID MATERIAL INTO A BATH OF LIQUID METAL, AND CORRESPONDING METHOD**
VORRICHTUNG ZUR INJEKTION VON FESTEM MATERIAL IN EIN FLÜSSIGMETALLBAD UND ENTSPRECHENDES VERFAHREN
DISPOSITIF PERMETTANT D'INJECTER UNE MATIÈRE SOLIDE DANS UN BAIN DE MÉTAL LIQUIDE ET PROCÉDÉ CORRESPONDANT

(30) Priority: 18.04.2011 IT UD20110060
(43) Date of publication of application: 26.02.2014
(73) Proprietor: Danieli & C. Officine Meccaniche, S.p.A., 33042 Buttrio (IT)
(72) Inventor: POLONI, Alfredo, I-34070 Fogliano di Redipuglia (IT); ANSOLDI, Marco, I-33100 Udine (IT)
(74) Representative: Petraz, Gilberto Luigi
(86) International application number: PCT/IB2012/000753
(87) International publication number: WO 2012/143774

(56) References cited:
- DE-C- 927 113
- GB-A- 792 192
- US-A- 3 199 924
- US-A- 3 239 278

## Description

### FIELD OF THE INVENTION

The present invention concerns a device, and the corresponding method, to inject solid material under the bath, mostly in granular form, powder and/or particles, in order to minimize the time taken for the material to pass from the device to the bath, thus increasing the volume (weight) of the material introduced, so as to increase efficiency and generate appropriate and desired chemical reactions in a bath of liquid metal, or to add additives to the liquid metal to improve its quality, or for other reasons.

The present invention is mainly although not exclusively applied in processes for melting metals in electric arc furnaces (EAF) in order to improve the efficiency of such processes, to improve the quality of the product obtained, to reduce melting times, to increase the working life of the components that are subject to wear, to increase the energy efficiency of the solids introduced, given the same volume and/or efficiency, to reduce the volumes introduced and hence the consumption thereof, with a reduction in the purchasing costs, to reduce energy consumption, and to obtain other advantages as described hereafter.

### BACKGROUND OF THE INVENTION

Melting processes are known, which use electric arc furnaces to melt metal materials of various types and origin, and to obtain liquid metal to be sent to working processes downstream, such as for example casting, rolling or other.

It is known that, during the melting process, as well as providing electric energy to feed the electrodes, auxiliary devices are normally used which perform various functions which are complementary but extremely important to optimize the process and to obtain a good quality final product.

For example it is known to use burners, oxygen lances and solid material injectors, of varying types and function, to improve the process conditions, reduce energy consumption, and limit wear on the parts, in particular the ends of the electrodes, forming foamy slag, and the refractory material that constitutes the hearth and parts of the lateral walls.

For example it is known to inject or introduce carbonaceous material into the bath of liquid metal, in powder or particles, in order to promote the formation of foamy slag on the surface of the bath, so as to increase the cover factor of the electric arc and thus to reduce both wear on the electrodes and also energy consumption.

In order to perform this function, the carbonaceous material can be introduced into the bath together with the metal material to be melted, for example mixed with it both in the case of a continuous charge with a transporter, and also in the case of an intermittent charge with baskets.

Alternatively, or in combination, the carbonaceous material can be injected into the bath by means of suitable lances disposed above, or even below, the upper level of the bath of liquid metal (meniscus), so as to mix with the bath and allow to achieve chemical reactions that promote the rapid development of the foamy slag.

Examples of such solutions can be found in US-B2-6.614.831 and US-4.110.107.

Other examples of injectors known in the state of the art are shown in DE-C-927.113, US-A-3.199.924, US-A-3.239.278 and GB-A-792.192.

DE'113 describes an injector to inject solid material into a furnace, which is mounted horizontally on the wall and, substantially near its terminal end and outside the furnace, has a magnet that regulates the quantity of material to be injected. This solution in no way allows to obtain an injection deep into the bath, keeping the injector outside and above the bath. Moreover, with the regulation methods using the magnet, it is not possible to obtain the emission speeds and energies required to obtain an injection of the carbonaceous material deep into the bath of liquid metal.

US'924 describes an injector to inject solid material through a thin channel made on the wall of the furnace, which leads into the bath of metal. The injection of the solid material directly inside the bath does not allow to obtain an in-depth distribution and determines a loss of efficiency and a delay in the effect of the solid particles in the bath. Furthermore, to prevent the material of the bath from rising inside the channel in the wall of the furnace and into the injector, the pressure in the chamber used for loading the carbonaceous material must be higher than the pressure in the furnace, and this causes operational and management complications.

US'278 also has a solution similar to US'924, with an injector inserted into the furnace wall that leads out directly inside the bath of liquid metal, with the same disadvantages as described above.

GB'192 does not show an injector suitable to be applied to the wall of an electric furnace for melting metal, but shows a tank of solid material from which an adjustable quantity of material is extracted.

It must also be considered that none of the documents described above teaches to use a flow of air or other gas under pressure, delivered in an impulsive manner (that is, with extremely limited emission times, high speed and high energy) to inject sold material from above the meniscus into deep into the bath.

It has been seen that the known methods described above for the introduction of carbonaceous material, and in general other solid materials inside the bath of liquid metal, are not satisfactory from the perspective of increasing the energy efficiency of the solids introduced and optimization of the results sought.

Indeed it has been found that, where the injector is above or inside the bath, the efficiency of the process is limited because the carbonaceous powders or particles affect only the upper layer, or in any case a limited layer, of the bath of liquid metal, and only later do they affect the remaining part.

In these cases, the delayed and limited start of the chemical reactions between the carbonaceous material and the bath of liquid metal causes the foamy slag to form late, and therefore the effect of covering the arc is contained, and hence the function of preserving the electrodes from wear is not performed efficiently, nor are energy savings achieved.

Another disadvantage is that this type of introduction promotes a loss of the product, which burns and goes into the fumes, without any advantage whatsoever for the process.

One purpose of the present invention is therefore to increase the efficiency of introducing the solid material, mostly in granular, powder and/or particle form, inside a bath of liquid metal in a melting process, in order to maximize the volume or weight of material introduced into the bath and the depth into the same, with the advantage that when it is under the bath it reacts with maximum yield.

Another purpose is to accelerate the start of the chemical reactions, involving all the liquid metal of the bath so as to maximize the final result of said reactions.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

According to the present invention, an injection device is provided with high kinetic energy and high quantity of motion, to inject a discrete amount of solid material in particles, powder or granulated form, of varying grain size, for example comprised between 0.15 and 15-20 mm, preferably between 5 and 8 mm. The injection device comprises a tubular pipe which can be applied on a lateral wall of a melting furnace so as to dispose its exit end inside the volume of the melting furnace, with a desired orientation with respect to the vertical, for example comprised between 15 and 70 degrees, above the meniscus of the liquid metal contained in the melting furnace.

The injection device is suitable to inject a predetermined amount of solid material inside the bath of liquid metal, substantially of any type in relation to the result to be obtained, for example carbonaceous material, slag formers such as for example lime, inert materials, slag, materials from demolitions, for example fluff from shredders, powders from fume sleeve filters, minerals of different types, etc.

According to the present invention, upstream of the tubular pipe and associated with it, the injection device comprises a chamber or tank to contain the solid material, and emitter means able to be selectively connected to the chamber or tank, and configured and suitable to produce an impulsive jet of pre-compressed gaseous fluid which, in combination with an exit valve that can be selectively opened, disposed at one end of the pipe, determines the emission of an impulsive flow of the material contained in the chamber or tank, with high kinetic energy and high quantity of motion, such as to substantially reach the bottom of the hearth, passing through the whole layer of slag and the bath of liquid metal.

In a preferred solution, the impulsive jet of fluid consists of a high pressure gas that is introduced, making it expand, inside the chamber or tank containing the solid material, in a position upstream of the exit valve, in temporal coordination with the opening of the valve.

By doing this, that is, by substantially synchronizing the introduction of the pressurized fluid, for example gas or air, inside the device and the opening of the exit valve, and using extremely limited opening times both of the valve that introduces the pressurized gas inside the device where it expands, and also the exit valve of the material from the device, a flow of material is obtained with high kinetic energy and high quantity of motion, which penetrates and passes through the layer of slag and liquid metal and substantially reaches the bottom of the hearth.

In a preferential form of embodiment of the invention, a speed to introduce the material is used which is more than 4 m/s, advantageously more than 8 m/s, even more preferably more than 9 - 10 m/s.

In another preferential form of embodiment of the invention, the opening time of the valve which introduces the pressurized gas or air inside the tubular pipe of the device is less than 0.4 seconds, advantageously less than 0.3 seconds and even more advantageously less than 0.2 seconds.

In a preferential form of embodiment, the pressure of the gas introduced into the tubular pipe of the device to achieve the emission of the impulsive flow of material is higher than 5 bar, advantageously higher than 7 bar, even more advantageously higher than 8 -10 bar.

The flow rate of material emitted with every impulsive emission cycle, in a preferential solution of the invention, is advantageously higher than 2 kg/s, more advantageously higher than 3 kg/s, even more advantageously higher than 4 - 5 kg/s.

According to the invention, the opening time of the exit valve of the material, associated with the end of the tubular pipe of the device, is comprised between 0.2 and 0.8 seconds, advantageously between 0.3 and 0.7 seconds, and even more advantageously between 0.4 and 0.6 seconds.

According to the invention, the values indicated above can be modified according to the operating conditions and the result to be obtained.

For example, the values can be modified according to the height of the liquid bath into which the material is injected, which can vary according to the melting cycle under way. During and at the end of the tapping step, for example, the level of the liquid bath inside the furnace is very low, in the range of 200 - 400 mm, corresponding to the height of the "hot heel" that is always maintained inside the furnace.

This situation, that is, the introduction of carbonaceous material at the end of tapping, is very important for the optimization of the process in that it is necessary that, when the new melting cycle starts, a foamy slag is obtained with a height and volume such as to guarantee the adequate cover of the electric arc and the material of the furnace that is subject to wear.

In this situation, the introduction parameters, mainly speed of flow, delivery rate and opening times of the valves, will be suitably calibrated in order to ensure that the bottom of the hearth is reached without ruining it by part of the jet of materials, and that the latter are distributed to affect the whole liquid bath.

If solid material is introduced during the melting process and/or during refining, when the level of the bath can reach 800-1000 mm or more, the introduction parameters will be increased compared to the previous case concerning the post-tapping step, achieving the same advantages that the present invention allows to obtain.

The geometric parameters of the device, for example length and diameter of the tubular pipe, distance of the exit end from the upper level of the bath, angle with respect to the vertical, etc., can also be modified both during the initial assembly step and also during the introduction of the material into the bath.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 shows a device according to the present invention applied on a wall of an electric furnace;
- fig. 2 is a plan view of an electric furnace where an injection device according to fig. 1 is applied;
- fig. 3 shows a device according to the present invention in a variant of fig. 1.

### DETAILED DESCRIPTION OF A PREFERENTIAL FORM OF EMBODIMENT

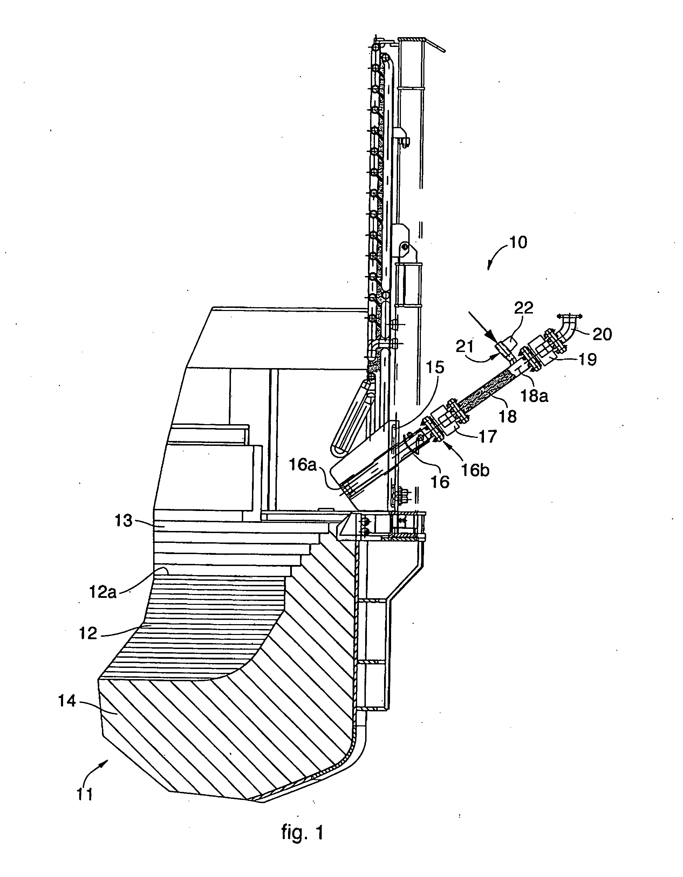

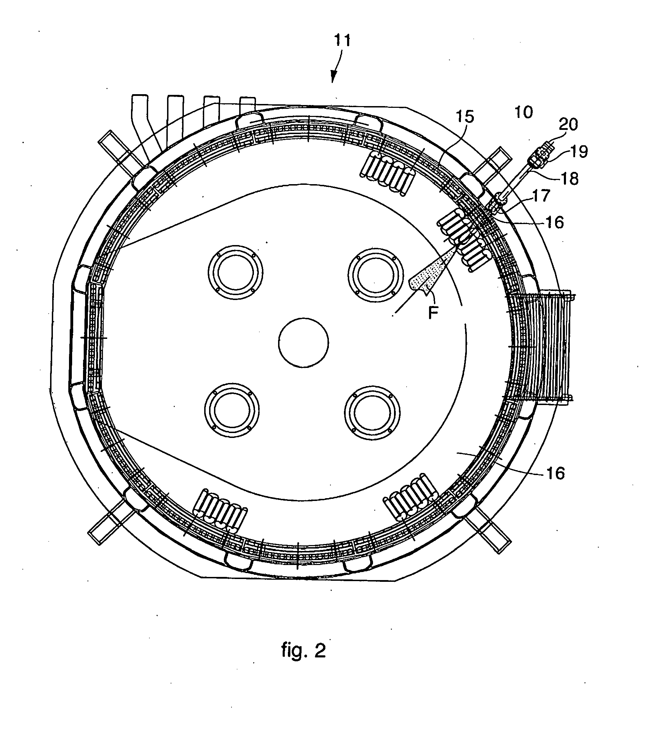

With reference to the attached figs. 1 and 2, the reference number 10 denotes in its entirety a device to inject solid material in granular form, powder or particles, able to be applied to a panel that constitutes part of the lateral wall of an electric furnace 11, in the case shown here the electric type (EAF).

The electric furnace 11, during use, contains a bath of liquid metal 12 with an upper surface 12a that can have a variable height, normally from a minimum of about 200 - 400 mm, usually corresponding to the "hot heel" that always remains inside the furnace, even after tapping, to a maximum of about 800 - 1000 mm, during the completion of the melting step and refining.

The liquid metal 12 can be covered by a layer of slag 13 normally having a height of about 200 - 500 mm when inactive.

The furnace 11 comprises a hearth 14 made of refractory material, which defines the bottom of the hearth 14 and lower part of the lateral walls, above which cooling panels 15 are disposed. The whole thing is closed by a roof (not shown) through which the electrodes (also not shown) are inserted: all this is substantially known in the state of the art.

The device 10 is applied in cooperation with the cooling panels 15 and substantially comprises a tubular pipe 16, having a diameter that can vary between 60 and 150-200 mm, advantageously between 80 and 120 mm, and a length that can vary between 800 and 1500 mm.

In the case shown as an example in fig. 2, there is a single device 10 applied on a respective panel 15, but it is clear that in some forms of embodiment there may be more than one injection device, disposed on the circumference at the proper technological distances from each other.

A lower end 16a of the tubular pipe 16 is inside the electric furnace 11, facing toward the liquid metal 12 for the injection of the solid material, and disposed during use above the level of the upper layer of slag 13, and an upper end 16b of the tubular pipe 16 is associated, that is, rigidly fixed, to a first exit valve 17, and in axis with the latter.

The first exit valve 17 selectively connects the tubular pipe 16 with the lower end of a chamber or tank 18, able to contain a predetermined and discrete quantity of material.

The tank 18 is elongated in shape and substantially aligned axially with the tubular pipe 16.

In the form of embodiment shown in figs. 1 and 2, a second valve 19 is associated with the upper end of the tank 18. Upstream, a pipe 20 is associated with the second valve 19, usable to feed the solid material in granules, powder or particles into the tank 18.

The pipe 20 can be any type, and is connected to an accumulation tank, an automatic feed line or other apparatus to store and feed the solid material in powder or granular form of the type in question.

The pipe 20 can also be associated to deflector mechanisms and/or multi-way valves for connection to a plurality of tanks, each containing a material of a different type and grain size according to the type of processing and/or the processing step in progress.

A pipe 21 to introduce a pre-compressed fluid, in this case pressurized gas, for example air or preferably another, substantially inert gas, is provided in association with the device 10: the connection or coupling position of the introduction pipe 21 is provided advantageously in correspondence with the upper part of the tank 18.

A valve 22, or third valve, is provided along the pipe 21 in order to activate/de-activate the introduction of the pre-compressed gas upstream of the tank 18, thus generating, in coordination with the opening of the first valve or exit valve 17, the emission of an impulsive flow of material, indicated in fig. 2 by the letter F, under the thrust of the pre-compressed jet of gas, which expands, toward the liquid metal 12.

In a coordinated manner, the tank has a zone 18a of selective communication, thanks to the third valve 22, with the pipe 21, that is, a zone 18a of the tank 18, in correspondence with the coupling of the pipe 21, where the pre-compressed gas enters, expanding, into the tank 18: for the functioning of the device 10 the zone 18a must preferably remain free of material.

The procedure for filling the tank 18 provides to close the first exit valve 17, or exit valve, to open the second valve 19, or entrance valve, and to activate a mechanism to feed the material (not shown, and generally known) through the pipe 20. Once the tank 18 has been filled with the desired quantity of material, the second valve 19 is closed and the device 10 is ready for the introduction of the material inside the liquid bath when the valves 17 and 22 are subsequently opened. In particular, the material is introduced toward the liquid metal 12 by opening the first exit valve 17 and then, in rapid sequence, the third valve 22, to allow the impulsive jet of pre-compressed gas to expand inside the tank 18. The impulsive jet of pre-compressed gas is mixed substantially instantaneously with the solid material in the tank 18 and draws it through the tubular pipe 16, obtaining the emission of the impulsive flow F of material contained in the tank 18 with high kinetic energy and high quantity of motion through the tubular pipe 16 toward the liquid metal 12.

Depending on the type of material, the processing conditions, the result to be obtained, the quantity of liquid metal 12 inside the furnace 11, the position and structure of the device 10, the operating parameters of the device 10 can be regulated and varied to obtain the best functionality, even during the course of the introduction step itself.

The present parameters, preferential but not binding or restrictive, were tested by Applicant for a procedure to introduce carbonaceous material used to activate the formation of foamy slag in a step after tapping a quantity of liquid metal from the furnace 10.

To obtain an introduction speed of the material higher than 9-10 m/s, which has proved itself to be advantageous to allow the material to reach the bottom of the hearth 14 and allow an effective propagation of the material to a great quantity of metal, the third valve 22 was opened for a time of less than 0.2 seconds.

The pressure of the pre-compressed gas introduced from the pipe 21 inside the tubular pipe 16 of the device 10 to achieve the emission of the impulsive flow F of material was higher than 8 bar.

The flow rate of material emitted with every impulsive cycle was higher than 4.5 kg/s, while the first exit valve 17 for the material was opened for between 0.4 and 0.6 seconds. The overall cycle for the impulsive flow F of material was less than 1 second.

The flow rate of material injected into the liquid bath was about 5-6 kg/s, while the flow rate of the pressurized gas was about 40-70 l/s.

Using these values, with an average grain size of the carbonaceous material about 2-4 mm, the time taken to pass through the whole height of the liquid bath was about 0.1 sec, thus obtaining the result that all the carbonaceous material passed through the layer of slag 13 above and the whole thickness of liquid metal 12 without dispersing or creating flashes or other losses during the passage.

In this way, an extremely high percentage of the carbonaceous material injected was able to react substantially immediately with the liquid metal 12, quickly creating the conditions for the formation of a large volume of foamy slag, giving advantages to the processing conditions for re-starting a new casting cycle.

The above parameters can be modified in the case of different materials, and/or different processing conditions, but shall in any case come within the ranges indicated in the present description.

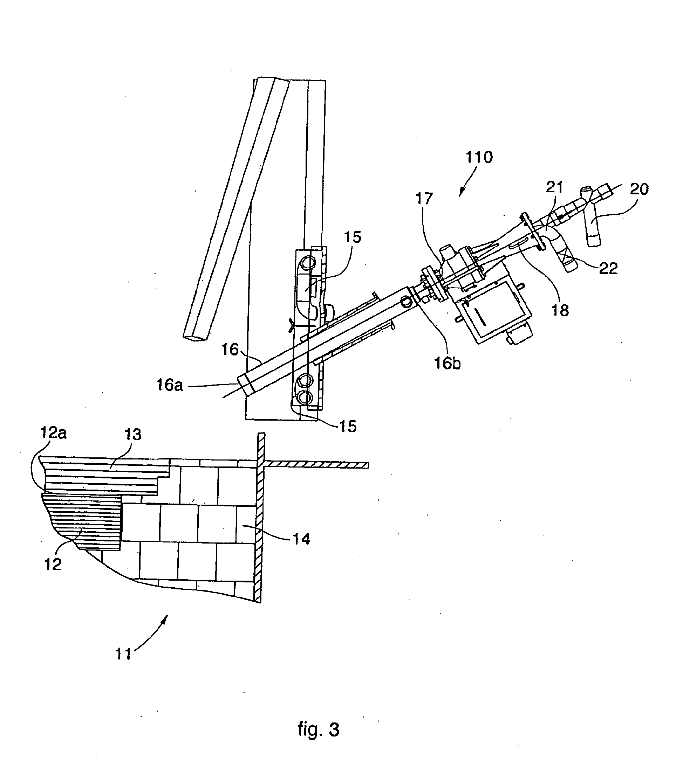

Fig. 3 shows another form of embodiment of an injection device 110. In this figure, the same numbers are used to refer to components identical or corresponding to those shown in fig. 1.

The device 110 shown in fig. 3 does not have the second introduction valve 19 to delivery the material, and the solid carbonaceous material is accumulated in the tank 18, upstream of the pipe 16, directly through the pipe 20 connected to an external silo (not shown), at a relatively low constant pressure, for example in the range of 1-2 bar. When the tank 18 is full, the device 110 is ready for the injection, at high speed and high energy.

When the valve 22 for the air or other gas is opened and the introduction of the pressurized gas is activated and, in coordination, the exit valve 17 is opened, in the way and with the times as described above, the material in the tank 18 is shot through the pipe 16 into the liquid metal 12 at extremely high speed to obtain a high penetrating energy. As already described, the pressure used for the expulsion is more than 5 bar, advantageously more than 7 bar, even more advantageously more than 8-10 bar, and is therefore much higher than the pressure at which the material is introduced inside the tank 18; thanks to the difference between these two pressures, during the expulsion, the introduction of material into the tank 18 is blocked. When the introduction of the gas is finished, the tank 18 is automatically refilled and is ready for a new cycle to introduce material into the bath.

This variant allows to obtain a smaller device than the device in fig. 1, therefore having less weight, so as to be moved manually, without having recourse to cranes or other devices for mechanical movement.

## Claims

1. Injection device for injecting a discrete amount of solid material in particles, powder or granulated form, of varying grain size, for example comprised between 0.15 and 15-20 mm, comprising a tubular pipe (16) which can be applied on a lateral wall of a melting furnace (11) so as to dispose its exit lower end (16a) inside the volume of the melting furnace (11) and above the meniscus of the liquid metal (12) contained in the melting furnace (11), said tubular pipe during use being angled by an angle comprised between 15° and 70° with respect to the vertical, in order to inject the solid material inside the liquid metal (12), said device also comprising a chamber or tank (18) to contain the solid material upstream of said tubular pipe (16) and associated therewith, said tubular pipe (16) comprising said lower end (16a) and an upper end (16b) associated to a first exit valve (17), wherein said first exit valve (17) selectively connects said tubular pipe (16) with a lower end of said chamber or tank (18), the injection device also comprising a pipe (20) to introduce said solid material into said chamber or tank (18) and a pipe (21) connected to an upper part of said chamber or tank (18) to introduce a pre-compressed fluid inside the chamber or tank (18), **characterized in that** the injection device (10) comprises a third valve (22) provided along the pipe (21) and which can be selectively opened for an opening time less than 0.4 seconds, to introduce at least upstream of said tubular pipe (16) an impulsive jet of pre-compressed gas or air which, in coordination with the opening of said first exit valve (17) which can be selectively opened for a time comprised between 0,2 and 0,8 seconds, and in rapid sequence with respect to said third valve (22), determines the emission of an impulsive flow (F) of the solid material contained in said chamber or tank (18), with high kinetic energy and quantity of motion.

2. Device as in claim 1, **characterized in that** said pipe (21) to introduce a pre-compressed fluid inside the chamber or tank (18), said third valve (22) and said first exit valve (17) are configured so as to produce an introduction speed of the material higher than 4 m/s, advantageously higher than 8 m/s, and even more preferably higher than 9-10 m/s.

3. Device as in any claim hereinbefore, **characterized in that** said valve means (22) are configured to determine an opening time of the third valve (22) less than 0.3 seconds and advantageously less than 0.2 seconds.

4. Device as in any claim hereinbefore, **characterized in that** said chamber or tank (18) is disposed aligned axially to said tubular pipe (16) and at its upper end a second valve or entrance valve (19), associated with said pipe (20) to feed the solid material.

5. Device as in any claim from 1 to 3, **characterized in that** said chamber or tank (18) is directly connected to said pipe (20) to feed said solid material by means of direct introduction into said tank (18) at a pressure comprised between 1 and 2 bar.

6. Method for injecting a discrete amount of solid material in particles, powder or granulated form of various grain size, for example comprised between 0.15 and 15-20 mm, by means of a device (10) comprising a tubular pipe (16) which is applied on a lateral wall of a melting furnace (11) with an angle comprised between 15° and 70° with respect to the vertical so as to dispose its lower end (16a) inside the volume of the melting furnace (11) and above the meniscus of the liquid metal (12) contained in the melting furnace (11), in order to inject the solid material inside the liquid metal (12), wherein a chamber or tank (18) is used to contain the solid material upstream of said tubular pipe (16) and associated therewith, the method providing:
- to associate a first exit valve (17) to an upper end (16b) of said tubular pipe (16) in order to selectively connect said tubular pipe (16) with a lower end of said chamber or tank (18),
- to provide a pipe (20) to introduce said solid material into said chamber or tank (18), and
- to provide a pipe (21) connected to an upper part of said chamber or tank (18) to introduce a pre-compressed fluid inside inside the chamber or tank (18) **characterized in that** it provides that a third valve (22) provided along the pipe (21) and selectively connected to said chamber or tank (18) is selectively opened for a time less than 0,4 seconds to produce an impulsive jet of pre-compressed gas or air which, in coordination with the opening of said first exit valve (17), which is opened for a time comprised between 0,2 and 0,8 seconds, and in rapid sequence with respect to said third valve (22), determines the emission of an impulsive flow (F) of the material contained in said chamber or tank (18), with high kinetic energy and high quantity of motion.

7. Method as in claim 6, **characterized in that** it provides that the introduction speed of the material is higher than 4 m/s, advantageously higher than 8 m/s, and even more preferably higher than 9 m/s.

8. Method as in claim 6 or 7, **characterized in that** it provides that the opening time of the valve means (22) is less than 0.3 seconds and more advantageously less than 0.2 seconds.

9. Method as in any claim from 6 to 8, **characterized in that** it provides that the pressure of the pre-compressed fluid introduced into the tubular pipe (16) of the device (10) to achieve the emission of the impulsive flow (F) of material is higher than 5 bar, advantageously higher than 7 bar and even more advantageously higher than 8 - 10 bar.

10. Method as in any claim from 6 to 9, **characterized in that** it provides that the flow rate of material emitted with every impulsive emission cycle is higher than 2 kg/s, advantageously higher than 3 kg/s, even more advantageously higher than 4-5 kg/s.

11. Method as in any claim from 6 to 10, **characterized in that** it provides that the opening time of the first exit valve (17) of the material, is comprised between 0.3 and 0.7 seconds and advantageously between 0.4 and 0.6 seconds.

12. Method as in any claim from 7 to 12, **characterized in that** it provides a step of filling said chamber or tank (18), disposed aligned axially to said tubular pipe (16) and having said first exit valve (17) at its lower end associated with the tubular pipe (16), and at the opposite end a second valve, or entrance valve (19), associated with means (20) to feed the solid material, said chamber or tank (18) having a zone (18a) which is put in selective communication with said pipe (21) by means of said third valve (22) said filling step providing the closure of said first exit valve (17), the opening of the second valve (19) and the activation of a feed mechanism to feed the material through the feed means (20), thus filling the chamber or tank (18) which contains the solid material (18) with the desired amount of material and keeping free the zone (18a) of selective communication with said pipe (21) and said third valve (22), and, after the filling step, the second valve (19) is closed and subsequently the introduction is determined of the material toward said liquid metal (12) by means of said pipe (21) and said third valve (22), effecting the opening of the first exit valve (17) and subsequently, in rapid succession, the opening of the third valve (22) so as to allow the expansion of the impulsive jet of pre-compressed fluid into the chamber or tank (18), obtaining the emission of said impulsive flow (F) of the material from the chamber or tank (18) with high kinetic energy and high quantity of motion through said tubular pipe (16) toward said liquid metal (12).

13. Device as in any claim from 6 to 11, **characterized in that** it provides to accumulate the solid material in said chamber or tank (18) directly through feeding means (20) connected to an external tank, wherein the introduction from the external tank to said chamber (18) occurs at a pressure comprised between 1 and 2 bar.

## Patentansprüche

1. Einspritzvorrichtung zum Einspritzen eines diskreten Betrags von Feststoffmaterial in Partikel-, Pulver oder Granulat-Form unterschiedlicher Korngröße, z.B. im Bereich zwischen 0,15 und 15-20mm, aufweisend eine Rohrleitung (16), welche an einer Seitenwand eines Schmelzofens (11) anwendbar ist, um ihr unteres Ausgangsende (16a) im Innern des Volumens des Schmelzofens (11) und oberhalb des Spiegels des Flüssigmetalls (12) anzuordnen, das im Schmelzofen (11) enthalten ist, wobei die Rohrleitung während der Verwendung um einen Winkel im Bereich zwischen 15° und 70° bezüglich der Vertikalen winklig ist, um das Feststoffmaterial in das Flüssigmetall (12) einzuspritzen, wobei die Vorrichtung ferner aufweist eine Kammer oder einen Tank (18), um das Feststoffmaterial zu enthalten, stromaufwärts der Rohrleitung (16) und damit in Verbindung stehend, wobei die Rohrleitung (16) ein unteres Ende (16a) und ein oberes Ende (16b) aufweist, das mit einem ersten Ausgangsventil (17) in Verbindung steht, wobei das erste Ausgangsventil (17) selektiv die Rohrleitung (16) mit einem unteren Ende der Kammer oder des Tanks (18) verbindet, wobei die Einspritzvorrichtung ferner aufweist eine Leitung (20), um das Feststoffmaterial in die Kammer oder den Tank (18) zuzuführen, und eine Leitung (21), welche mit einem oberen Teil der Kammer oder des Tanks (18) verbunden ist, um ein vorkomprimiertes Fluid in die Kammer oder den Tank (18) zuzuführen, **dadurch gekennzeichnet, dass** die Einspritzvorrichtung (10) ein drittes Ventil (22) aufweist, das entlang der Leitung (21) bereitgestellt ist und das selektiv geöffnet werden kann für eine Öffnungszeit kleiner als 0,4 Sekunden, um wenigstens stromaufwärts der Rohrleitung (16) einen Impulsstrahl von vorkomprimiertem/r Gas oder Luft, welcher, in Abstimmung mit dem Öffnen des ersten Ausgangsventils (17), welches selektiv für eine Zeit im Bereich zwischen 0,2 und 0,8 Sekunden geöffnet werden kann, und in schneller Sequenz bezüglich des dritten Ventils (22), die Emission eines Impulsflusses (F) des Feststoffmaterials, das in der Kammer oder dem Tank (18) enthalten ist, mit hoher kinetischer Energie und Bewegungsquantität bestimmt.

2. Vorrichtung gemäß Anspruch 1, **dadurch gekennzeichnet, dass** die Leitung (21), um ein vorkomprimiertes Fluid in die Kammer oder den Tank (18) zuzuführen, das dritte Ventil (22) und das erste Ausgangsventil (17) konfiguriert sind, um eine Zuführgeschwindigkeit des Materials größer als 4 m/s, vorteilhafterweise größer als 8 m/s und sogar mehr bevorzugt größer als 9-10 m/s zu erzeugen.

3. Vorrichtung gemäß irgendeinem vorhergehenden Anspruch, **dadurch gekennzeichnet, dass** die Ventilmittel (22) konfiguriert sind, um eine Öffnungszeit des dritten Ventils (22) kleiner als 0,3 Sekunden und vorteilhafterweise kleiner als 0,2 Sekunden zu bestimmen.

4. Vorrichtung gemäß irgendeinem vorhergehenden Anspruch, **dadurch gekennzeichnet, dass** die Kammer oder der Tank (18) axial zu der Rohrleitung (16) ausgerichtet angeordnet ist und an ihrem/seinem oberen Ende ein zweites Ventil oder Eingangsventil (19) hat, das mit der Leitung (20) in Verbindung steht, um das Feststoffmaterial zuzuführen.

5. Vorrichtung gemäß irgendeinem der Ansprüche 1 bis 3, **dadurch gekennzeichnet, dass** die Kammer oder der Tank (18) direkt mit der Leitung (20) verbunden ist, um das Feststoffmaterial zuzuführen mittels direkter Zuführung in den Tank (18) bei einem Druck im Bereich zwischen 1 und 2 bar.

6. Verfahren zum Einspritzen eines diskreten Betrags von Feststoffmaterial in Partikel-, Pulver- oder Granulat-Form unterschiedlicher Korngröße, z.B. von im Bereich zwischen 0,15 und 15-20mm, mittels einer Vorrichtung (10), die aufweist eine Rohrleitung (16), die an einer Seitenwand eines Schmelzofens (11) angewandt wird mit einem Winkel im Bereich zwischen 15° und 70° bezüglich der Vertikalen, um ihr unteres Ende (16a) im Innern des Volumens des Schmelzofens (11) und oberhalb des Spiegels des Flüssigmetalls (12), das im Schmelzofen (11) enthalten ist, anzuordnen, um das Feststoffmaterial in das Flüssigmetall (12) einzuspritzen, wobei eine Kammer oder ein Tank (18), um das Feststoffmaterial zu enthalten, verwendet wird stromaufwärts der Rohrleitung (16) und damit in Verbindung stehend, wobei das Verfahren umfasst:
- Bereitstellen eines ersten Ausgangsventil (17) an einem oberen Ende (16b) der Rohrleitung (16), um selektiv die Rohrleitung (16) mit einem unteren Ende der Kammer oder des Tanks (18) zu verbinden,
- Bereitstellen einer Leitung (20), um das Feststoffmaterial in die Kammer oder den Tank (18) zuzuführen, und
- Bereitstellen einer Leitung (21), die mit einem oberen Teil der Kammer oder des Tanks (18) verbunden ist, um ein vorkomprimiertes Fluid in die Kammer oder den Tank (18) zuzuführen, **dadurch gekennzeichnet, dass** es umfasst, dass ein drittes Ventil (22), welches entlang der Leitung (21) bereitgestellt ist und selektiv mit der Kammer oder dem Tank (18) verbunden ist, selektiv geöffnet wird für eine Zeit kleiner als 0,4 Sekunden, um einen Impulsstrahl von komprimiertem/r Gas oder Luft zu erzeugen, welcher, in Abstimmung mit dem Öffnen des ersten Ausgangsventils (17), welches für eine Zeit im Bereich zwischen 0,2 und 0,8 Sekunden geöffnet wird, und in schneller Sequenz bezüglich des dritten Ventils (22), die Emission eines Impulsflusses (F) des Materials, das in der Kammer oder im Tank (18) enthalten ist, mit hoher kinetischer Energie und hoher Bewegungsquantität bestimmt.

7. Verfahren gemäß Anspruch 6, **dadurch gekennzeichnet, dass** es umfasst, dass die Zuführgeschwindigkeit des Materials größer als 4 m/s, vorteilhafterweise größer als 8 m/s und sogar noch bevorzugter größer als 9 m/s ist.

8. Verfahren gemäß Anspruch 6 oder 7, **dadurch gekennzeichnet, dass** es umfasst, dass die Öffnungszeit der Ventilmittel (22) kleiner als 0,3 Sekunden und noch vorteilhafter kleiner als 0,2 Sekunden ist.

9. Verfahren gemäß irgendeinem der Ansprüche 6 bis 8, **dadurch gekennzeichnet, dass** es umfasst, dass der Druck des vorkomprimierten Fluid, das in die Rohrleitung (16) der Vorrichtung (10) zugeführt wird, um die Emission des Impulsflusses (F) des Materials zu erreichen, größer als 5 bar, vorteilhafterweise größer als 7 bar und sogar noch weiter vorteilhafterweise größer als 8-10 bar ist.

10. Verfahren gemäß irgendeinem der Ansprüche 6 bis 9, **dadurch gekennzeichnet, dass** es umfasst, dass die Flussrate des Materials, das mit jedem Impulsemissionszyklus emittiert wird, größer als 2 kg/s, vorteilhafterweise größer als 3 kg/s und sogar noch weiter vorteilhafterweise größer als 4-5 kg/s ist.

11. Verfahren gemäß irgendeinem der Ansprüche 6 bis 10, **dadurch gekennzeichnet, dass** es umfasst, dass die Öffnungszeit des ersten Ausgangsventils (17) des Materials im Bereich zwischen 0,3 und 0,7 Sekunden und vorteilhafterweise zwischen 0,4 und 0,6 Sekunden ist.

12. Verfahren gemäß irgendeinem der Ansprüche 7 bis 12, **dadurch gekennzeichnet, dass** es umfasst einen Schritt des Füllens der Kammer oder des Tanks (18), der zu der Rohrleitung (16) axial ausgerichtet angeordnet ist und der das erste Ausgangsventil (17) an seinem unteren Ende in Verbindung mit der Rohrleitung (16) und am entgegengesetzten Ende ein zweites Ventil oder Eingangsventil (19) hat, das mit Mitteln (20) zum Zuführen des Feststoffmaterials in Verbindung steht, wobei die Kammer oder der Tank (18) eine Zone (18a) hat, welche in selektive Kommunikation mit der Leitung (21) gebracht wird mittels des dritten Ventils (22), wobei der Füllschritt umfasst das Schließen des ersten Ausgangsventils (17), das Öffnen des zweiten Ventils (19) und die Aktivierung eines Zuführmechanismus, um das Material durch die Zuführmittel (20) zuzuführen, um dadurch die Kammer oder den Tank (18) zu füllen, welcher das Feststoffmaterial (18) enthält, mit dem gewünschten Betrag des Materials und die Zone (18a) der selektiven Kommunikation mit der Leitung (21) und dem dritten Ventil (22) freizuhalten, wobei, nach dem Füllschritt, das zweite Ventil (19) geschlossen wird und nachfolgend die Zuführung des Materials zu dem Flüssigmetall (12) bestimmt wird mittels der Leitung (21) und des dritten Ventils (22) unter Bewirken des Öffnens des ersten Ausgangsventils (17) und nachfolgend, in schneller Abfolge, des Öffnens des dritten Ventils (22), um die Expansion des Impulsstrahls des vorkomprimierten Fluid in die Kammer oder den Tank (18) zu erlauben unter Erzielen der Emission des Impulsflusses (F) des Materials von der Kammer oder dem Tank (18) mit hoher kinetischer Energie und hoher Bewegungsquantität durch die Rohrleitung (16) hindurch zu dem Flüssigmetall (12) hin.

13. Vorrichtung gemäß irgendeinem der Ansprüche 6 bis 11, **dadurch gekennzeichnet, dass** sie umfasst, das Feststoffmaterial in der Kammer oder dem Tank (18) direkt durch Zuführmittel (20) zu akkumulieren, die mit einem externen Tank verbunden sind, wobei die Zuführung von dem externen Tank zu der Kammer (18) bei einem Druck im Bereich zwischen 1 und 2 bar stattfindet.

## Revendications

1. Dispositif d'injection destiné à injecter une quantité discrète de matière solide en particules, en poudre ou sous forme granulée, de taille de grain variable, par exemple comprise entre 0,15 et 15 à 20 mm, comportant une conduite tubulaire (16) qui peut être appliquée sur une paroi latérale d'un four de fusion (11) de manière à disposer son extrémité de sortie inférieure (16a) à l'intérieur du volume du four de fusion (11) et au-dessus du ménisque du métal liquide (12) contenu dans le four de fusion (11), ladite conduite tubulaire pendant l'utilisation étant inclinée d'un angle compris entre 15° et 70° par rapport à la verticale, afin d'injecter la matière solide à l'intérieur du métal liquide (12), ledit dispositif comportant également une chambre ou un réservoir (18) pour contenir la matière solide en amont de ladite conduite tubulaire (16) et associé à celle-ci, ladite conduite tubulaire (16) comportant ladite extrémité inférieure (16a) et une extrémité supérieure (16b) associée à une première vanne de sortie (17), dans lequel ladite première vanne de sortie (17) relie sélectivement ladite conduite tubulaire (16) à une extrémité inférieure de ladite chambre ou dudit réservoir (18), le dispositif d'injection comportant également une conduite (20) pour introduire ladite matière solide dans ladite chambre ou ledit réservoir (18) et une conduite (21) reliée à une partie supérieure de ladite chambre ou dudit réservoir (18) pour introduire un fluide pré-comprimé à l'intérieur de la chambre ou du réservoir (18), **caractérisé en ce que** le dispositif d'injection (10) comporte une troisième vanne (22) agencée le long de la conduite (21) et qui peut être sélectivement ouverte pendant un temps d'ouverture inférieur à 0,4 seconde, pour introduire au moins en amont de ladite conduite tubulaire (16) un jet impulsif de gaz ou d'air pré-comprimé qui, en coordination avec l'ouverture de ladite première vanne de sortie (17) qui peut être sélectivement ouverte pendant un temps compris entre 0,2 et 0,8 seconde, et en séquence rapide par rapport à ladite troisième vanne (22), détermine l'émission d'un écoulement impulsif (F) de la matière solide contenue dans ladite chambre ou ledit réservoir (18), avec une énergie cinétique élevée et une quantité de mouvement élevée.

2. Dispositif selon la revendication 1, **caractérisé en ce que** ladite conduite (21) pour introduire un fluide pré-comprimé à l'intérieur de la chambre ou du réservoir (18), ladite troisième vanne (22) et ladite première vanne de sortie (17) sont configurés de manière à produire une vitesse d'introduction de la matière supérieure à 4 m/s, de manière avantageuse supérieure à 8 m/s, et de manière encore plus préférée supérieure à 9 à 10 m/s.

3. Dispositif selon l'une quelconque des revendications précédentes, **caractérisé en ce que** lesdits moyens de vanne (22) sont configurés pour déterminer un temps d'ouverture de la troisième vanne (22) inférieur à 0,3 seconde et de manière avantageuse inférieur à 0,2 seconde.

4. Dispositif selon l'une quelconque des revendications précédentes, **caractérisé en ce que** ladite chambre ou ledit réservoir (18) est disposé aligné axialement sur ladite conduite tubulaire (16) et ayant, à son extrémité supérieure, une deuxième vanne ou vanne d'entrée (19), associée à ladite conduite (20) pour transférer la matière solide.

5. Dispositif selon l'une quelconque des revendications 1 à 3, **caractérisé en ce que** ladite chambre ou ledit réservoir (18) est directement relié à ladite conduite (20) pour acheminer ladite matière solide au moyen d'une introduction directe dans ledit réservoir (18) à une pression comprise entre 1 et 2 bar.

6. Procédé pour injecter une quantité discrète de matière solide en particules, en poudre ou sous forme granulée, de taille de grain diverse, par exemple comprise entre 0,15 et 15 à 20 mm, au moyen d'un dispositif (10) comportant une conduite tubulaire (16) qui est appliquée sur une paroi latérale d'un four de fusion (11) avec un angle compris entre 15° et 70° par rapport à la verticale de manière à disposer son extrémité inférieure (16a) à l'intérieur du volume du four de fusion (11) et au-dessus du ménisque du métal liquide (12) contenu dans le four de fusion (11), afin d'injecter la matière solide à l'intérieur du métal liquide (12), dans lequel une chambre ou un réservoir (18) est utilisé pour contenir la matière solide en amont de ladite conduite tubulaire (16) et associé à celle-ci, le procédé prévoyant :
- d'associer une première vanne de sortie (17) à une extrémité supérieure (16b) de ladite conduite tubulaire (16) afin de relier sélectivement ladite conduite tubulaire (16) à une extrémité inférieure de ladite chambre ou dudit réservoir (18),
- d'agencer une conduite (20) pour introduire ladite matière solide dans ladite chambre ou ledit réservoir (18), et
- d'agencer une conduite (21) reliée à une partie supérieure de ladite chambre ou dudit réservoir (18) pour introduire un fluide pré-comprimé à l'intérieur de la chambre ou du réservoir (18), **caractérisé en ce qu'**il est prévu qu'une troisième vanne (22) agencée le long de la conduite (21) et sélectivement reliée à ladite chambre ou audit réservoir (18) soit sélectivement ouverte pendant un temps inférieur à 0,4 seconde pour produire un jet impulsif de gaz ou d'air pré-comprimé qui, en coordination avec l'ouverture de ladite première vanne de sortie (17), qui est ouverte pendant un temps compris entre 0,2 et 0,8 seconde, et en séquence rapide par rapport à ladite troisième vanne (22), détermine l'émission d'un écoulement impulsif (F) de la matière contenue dans ladite chambre ou ledit réservoir (18), avec une énergie cinétique élevée et une quantité de mouvement élevée.

7. Procédé selon la revendication 6, **caractérisé en ce qu'**il est prévu que la vitesse d'introduction de la matière soit supérieure à 4 m/s, de manière avantageuse supérieure à 8 m/s, et de manière encore plus préférée supérieure à 9 m/s.

8. Procédé selon la revendication 6 ou 7, **caractérisé en ce qu'**il est prévu que le temps d'ouverture des moyens de vanne (22) soit inférieur à 0,3 seconde et de manière plus avantageuse inférieur à 0,2 seconde.

9. Procédé selon l'une quelconque des revendications 6 à 8, **caractérisé en ce qu'**il est prévu que la pression du fluide pré-comprimé introduit dans la conduite tubulaire (16) du dispositif (10) pour obtenir l'émission de l'écoulement impulsif (F) de matière soit supérieure à 5 bar, de manière avantageuse supérieure à 7 bar et de manière encore plus avantageuse supérieure à 8 à 10 bar.

10. Procédé selon l'une quelconque des revendications 6 à 9, **caractérisé en ce qu'**il est prévu que le débit de matière émise à chaque cycle d'émission impulsif soit supérieur à 2 kg/s, de manière avantageuse supérieur à 3 kg/s, de manière encore plus avantageuse supérieur à 4 à 5 kg/s.

11. Procédé selon l'une quelconque des revendications 6 à 10, **caractérisé en ce qu'**il est prévu que le temps d'ouverture de la première vanne de sortie (17) de la matière, soit compris entre 0,3 et 0,7 seconde et de manière avantageuse entre 0,4 et 0,6 seconde.

12. Procédé selon l'une quelconque des revendications 7 à 12, **caractérisé en ce qu'**il fournit une étape consistant à remplir ladite chambre ou ledit réservoir (18), disposé aligné axialement sur ladite conduite tubulaire (16) et ayant ladite première vanne de sortie (17) à son extrémité inférieure associée à la conduite tubulaire (16), et sur l'extrémité opposée, une seconde vanne ou vanne d'entrée (19), associée à des moyens (20) pour acheminer la matière solide, ladite chambre ou ledit réservoir (18) ayant une zone (18a) qui est mise en communication sélective avec ladite conduite (21) au moyen de ladite troisième vanne (22), ladite étape de remplissage assurant la fermeture de ladite première vanne de sortie (17), l'ouverture de la deuxième vanne (19) et l'activation d'un mécanisme de transférer pour transférer la matière à travers les moyens de transfert (20), en remplissant ainsi la chambre ou le réservoir (18) qui contient la matière solide (18) avec la quantité désirée de matière et en maintenant libre la zone (18a) de communication sélective avec ladite conduite (21) et ladite troisième vanne (22), et, après l'étape de remplissage, la deuxième vanne (19) est fermée et ensuite l'introduction est déterminée de la matière vers ledit métal liquide (12) au moyen de ladite conduite (21) et de ladite troisième vanne (22), effectuer l'ouverture de la première vanne de sortie (17) et ensuite, en succession rapide, l'ouverture de la troisième vanne (22) de manière à permettre l'expansion du jet impulsif de fluide pré-comprimé dans la chambre ou le réservoir (18), obtenir l'émission dudit écoulement impulsif (F) de la matière provenant de la chambre ou du réservoir (18) avec une énergie cinétique élevée et une quantité de mouvement élevée à travers ladite conduite tubulaire (16) vers ledit métal liquide (12).

13. Dispositif selon l'une quelconque des revendications 6 à 11, **caractérisé en ce qu'**il est prévu d'accumuler la matière solide dans ladite chambre ou ledit réservoir (18) directement à travers des moyens d'alimentation (20) reliés à un réservoir externe, dans lequel l'introduction du réservoir externe à ladite chambre (18) se produit à une pression comprise entre 1 et 2 bar.
